# EUROPÄISCHE PATENTSCHRIFT

(11) **EP 1 497 594 B1**
(45) Veröffentlichungstag und Bekanntmachung des Hinweises auf die Patenterteilung: **22.02.2006**
(21) Anmeldenummer: 03732277.3
(22) Anmeldetag: 11.04.2003
(51) Int. Cl.: F24H 3/04, F24H 9/18

(54) **ZU HEIZZWECKEN DIENENDER WÄRMEüBERTRAGER MIT ELEKTRISCHER HEIZEINRICHTUNG**
HEAT EXCHANGER PROVIDED FOR HEATING PURPOSES AND COMPRISING AN ELECTRIC HEATING DEVICE
DISPOSITIF DE TRANSMISSION DE CHALEUR UTILISE A DES FINS DE CHAUFFAGE ET COMPRENANT UN SYSTEME ELECTRIQUE CHAUFFANT

(30) Priorität: 12.04.2002 DE 10216157
(43) Veröffentlichungstag der Anmeldung: 19.01.2005
(73) Patentinhaber: Behr GmbH & Co. KG, 70469 Stuttgart (DE)
(72) Erfinder: ENGLERT, Peter, 74177 Bad Friedrichshall (DE); KOHL, Michael, 74348 Lauffen (DE); TRAUB, Matthias, 70825 Korntal-Münchingen (DE)
(74) Vertreter: Grauel, Andreas
(86) Internationale Anmeldenummer: PCT/EP2003/003770
(87) Internationale Veröffentlichungsnummer: WO 2003/088712

(56) Entgegenhaltungen:
- DE-A- 19 922 668
- FR-A- 2 793 546

## Beschreibung

Die vorliegende Erfindung betrifft einen zu Heizzwecken dienenden Wärmeübertrager, insbesondere für ein Kraftfahrzeug, mit den Merkmalen des Oberbegriffs des Anspruchs 1.

Ein derartiger Wärmeübertrager ist beispielsweise aus der DE 198 35 229 A1 bekannt und besitzt mehrere parallele Rohre sowie mehrere elektrische Heizeinrichtungen, die jeweils zwischen zwei benachbarten Rohren angeordnet sind. Darüber hinaus sind mehrere Rippenelemente vorgesehen, die jeweils zwischen paarweise benachbarten Rohren sowie zwischen jeder Heizeinrichtung und den dazu benachbarten Rohren angeordnet sind. Ein derartiger Wärmeübertrager kommt beispielsweise bei einem Kraftfahrzeug in einem Heizkreis einer Luftbehandlungsanlage zur Anwendung, um Luft, die einem Fahrzeuginnenraum zugeführt wird, zu erwärmen. Zu diesem Zweck zirkuliert in den Rohren die Flüssigkeit des Heizkreises. Die zu erwärmende Luft strömt zwischen den Rohren durch die Rippenelemente hindurch. Im Normalbetrieb überträgt dabei die heiße Heizflüssigkeit Wärme auf die Rohre und von diesen auf die Rippenelemente. Von den Rippenelementen gelangt dann die Wärme an die Luft. Für den Fall, daß über die Heizflüssigkeit nicht ausreichend Wärme zugeführt werden kann, sind die elektrischen Heizeinrichtungen vorgesehen, die bei ihrer Aktivierung elektrischen Strom in Wärme wandeln und diese an die Rippenelemente abgeben.

Beim bekannten Wärmtauscher enthält jede Heizeinrichtung einen einzelnen Heizstrang, der zweckmäßig durch mindestens ein PTC-Element gebildet sein kann. Der Heizstrang ist an zwei einander gegenüberliegenden Außenseiten jeweils mit den Rippenelementen wärmeübertragend verbunden. Um eine hinreichend gleichmäßige Erwärmung der Luftströmung gewährleisten zu können, sind mehrere derartige Heizeinrichtungen etwa gleichmäßig zwischen den Rippen des Wärmeübertragers eingesetzt. Dabei kann die Anzahl dieser Heizeinrichtungen nicht beliebig groß gewählt werden, da für den Normalbetrieb eine hinreichend große Anzahl von Rohren vorliegen muß, um die erforderliche Wärmeübertragung an die Luftströmung gewährleisten zu können. Der Strombedarf des einzelnen Heizstrangs ist relativ hoch, so daß es bei der Verwendung in einem Kraftfahrzeug bei bestimmten Betriebszuständen des Fahrzeugs erforderlich ist, ein oder mehrere Heizstänge auszuschalten, um eine Überlastung des Stromversorgungsnetzes des Fahrzeugs zu vermeiden. Bei mehreren ausgeschalteten Heizsträngen kann jedoch eine gleichmäßige Erwärmung in der Luftströmung nicht mehr erreicht werden, was zu Komforteinbußen führen kann.

Die vorliegende Erfindung beschäftigt sich mit dem Problem, für einen Wärmeübertrager der eingangs genannten Art eine verbesserte Ausführungsform anzugeben, die insbesondere einfacher hinsichtlich ihres Strombedarfs steuerbar ist.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die einzelnen Heizeinrichtungen jeweils mit zwei Heizstränge auszustatten, die separat ansteuerbar sind und ihre Wärme an zwei gegenüberliegenden Seiten der Heizeinrichtung direkt oder indirekt an die Rippenelemente abgeben. Hierbei verfügt jeder Heizstrang über mindestens ein Heizelement, das vorzugsweise als PTC-Element ausgeführt ist. Durch den erfindungsgemäßen Aufbau ist es bei einer gleichbleibenden Anzahl von Heizeinrichtungen möglich, die doppelte Anzahl von Heizsträngen im Wärmeübertrager unterzubringen. Bei gleichbleibender Heizleistung kann somit die elektrische Leistung an den einzelnen Heizsträngen halbiert werden. Durch den erfindungsgemäßen Aufbau ist es daher möglich, das Zuschalten bzw. Abschalten einzelner Heizstränge besser an die aktuelle Belastbarkeit des Stromnetzes anzupassen, an welches die Heizeinrichtungen angeschlossen sind.

Ein vereinfachter Aufbau kann dadurch erreicht werden, das jede Heizeinrichtung ein rohrförmiges Gehäuse aufweist, das zwei zueinander parallele Seitenwände besitzt, an deren Außenseiten die Rippenelemente und an deren Innenseiten die Heizstränge wärmeübertragend angeordnet sind.

Bei einer Weiterbildung kann jede Heizeinrichtung zwei Anpressplatten enthalten, die jeweils an einem der Heizstränge anliegen und zum Anpressen der Heizstränge gegen die Seitenwände des Gehäuses mit wenigstens einem Federelement auseinander gedrückt sind. Durch das aktive Andrücken der Heizstränge gegen das Gehäuse kann eine intensive Wärmeübertragung von den Heizsträngen an das Gehäuse gewährleistet werden.

Bei einer besonders vorteilhaften Ausführungsform können das Gehäuse und die Anpressplatten als elektrische Leiter ausgebildet sein; wobei dann bei jedem Heizstrang die an der jeweiligen Anpressplatte anliegende Innenseite einen ersten elektrischen Anschluß dieses Heizstrangs bildet, während die an der jeweiligen Seitenwand des Gehäuses anliegende Außenseite einen zweiten elektrischen Anschluß dieses Heizstrangs bildet. Darüber hinaus sind die beiden Anpressplatten gegeneinander elektrisch isoliert.

Um die beiden elektrisch leitenden Anpressplatten gegeneinander elektrisch isolieren zu können, können die folgenden Maßnahmen alternativ oder kumulativ zur Anwendung kommen:
- Das Federelement kann elektrisch isolierend ausgebildet sein,
- zwischen dem Federelement und wenigstens einer der Anpressplatten kann ein elektrischer Isolator angeordnet sein,
- das Federelement kann zumindest in einem an einer der Anpressplatten anliegenden Kontaktbereich mit einer elektrisch isolierenden Folie, Beschichtung, Lackierung, Anodisierung und/oder Oberfläche ausgestattet sein,
- wenigstens eine der Anpressplatten kann zumindest in einem am Federelement anliegenden Kontaktbereich mit einer elektrisch isolierenden Folie, Beschichtung, Lackierung und/oder Oberfläche ausgestattet sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- **Fig. 1**: eine Frontansicht auf einen erfindungsgemäßen Wärmeübertrager,
- **Fig. 2**: eine Schnittansicht des Wärmeübertrages nachFig. 1 entsprechend den Schnittlinien II in Fig. 1,
- **Fig. 3 bis 6**: Querschnitte durch verschiedene Ausführungsformen von Heizeinrichtungen des Wärmeübertragers.

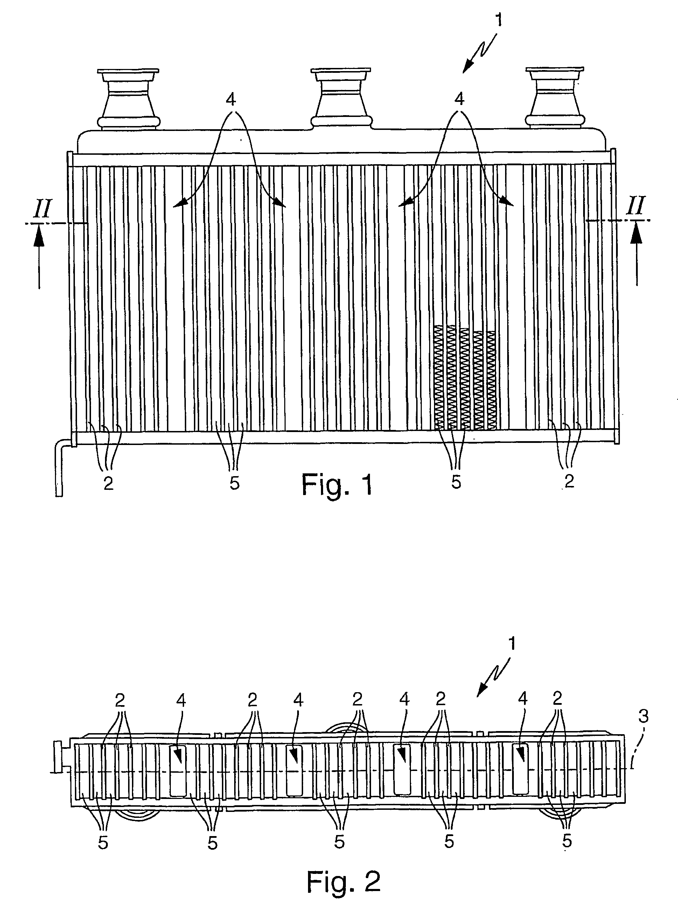

Entsprechend den Fig. 1 und 2 besteht ein Wärmeübertrager 1 nach der Erfindung aus einer Vielzahl von Rohren 2, die parallel zueinander angeordnet sind. Üblicherweise sind diese Rohre 2 in einer Ebene nebeneinander angeordnet, die in Fig. 1 der Zeichnungsebene entspricht und in Fig. 2 mit 3 bezeichnet ist. Die Rohre 2 sind hier als sogenannte "Flachrohre" ausgebildet und besitzen somit einen Querschnitt, der quer zur Ebene 3 erheblich größer dimensioniert ist als parallel zur Ebene 3. Der Wärmeübertrager 1 besitzt außerdem mehrere, hier vier, elektrische Heizeinrichtungen 4, die ebenfalls parallel zu den Rohren 2 verlaufen und dabei jeweils zwischen zwei benachbarten Rohren 2 angeordnet sind. Des weiteren ist eine Vielzahl von Rippenelementen 5 vorgesehen, deren Rippen so verlaufen, daß sie quer zur Ebene 3 durchströmbar sind. Die Rippenelemente 5 sind zum einen jeweils zwischen paarweise benachbarten Rohren 2 angeordnet. Zum anderen sind derartige Rippenelemente 5 jeweils zwischen jeder Heizeinrichtung 4 und den dazu benachbarten Rohren 2 angeordnet.

Der Wärmeübertrager 1 wird vorzugsweise in einer Luftbehandlungseinrichtung eines Kraftfahrzeugs dazu verwendet, eine Luftströmung, die einem Fahrzeuginnenraum zugeführt werden soll, bedarfsabhängig zu erwärmen. Zu diesem Zweck wird die Luftströmung quer zur Ebene 3 durch den Wärmeübertrager 1 geführt. Der Wärmeübertrager 1 ist dann an einen Heizkreis angeschlossen, so daß in den Rohren 2 des Wärmeübertragers 1 eine Heizflüssigkeit zirkuliert. Dieser Heizkreis kann beispielsweise in einen Kühlkreis einer Brennkraftmaschine des Fahrzeugs integriert sein. Die Wärmeübertragung von der Heizflüssigkeit auf die Luftströmung erfolgt dabei über die Rohre 2 und die Rippenelemente 5.

Für den Fall, daß die Heizflüssigkeit nicht ausreichend Wärmeenergie bereitstellen kann, werden die Heizeinrichtungen 4 mit Strom versorgt, wobei entsprechende Stromanschlüsse hier nicht dargestellt sind.

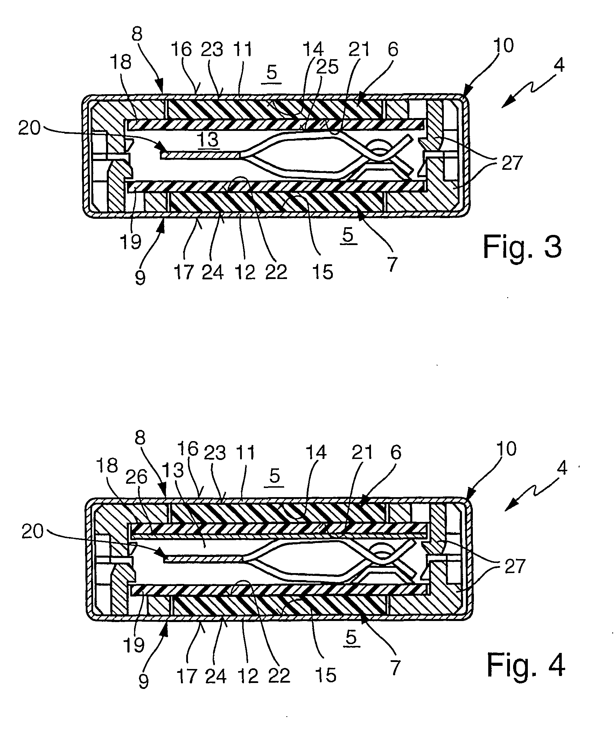

Entsprechend den Fig. 3 bis 6 enhält jede Heizeinrichtung 4 zwei Heizstränge 6 und 7, die sich jeweils parallel zu den Rohren 2 erstrecken. Zweckmäßig erstreckt sich dabei jeder Heizstrang 6,7 entlang der gesamten Länge der Heizeinrichtung 4, also entlang der gesamten Länge der Rohre 2. Die beiden Heizstränge 6,7 sind an einander gegenüberliegenden Seiten 8 bzw. 9 der Heizeinrichtung 4 angeordnet. Die Anordnung und Orientierung der beiden Heizstränge 6,7 erfolgt dabei so, daß jeder Heizstrang 6,7 einem der Heizeinrichtung 4 benachbarten Rohr 2 zugewandt ist.

Erfindungsgemäß sind die beiden Heizstränge 6,7 unabhängig voneinander ansteuerbar bzw. aktivierbar.

Bei den hier gezeigten Ausführungsformen besitzt der Wärmeübertrager außerdem mindestens ein rohrförmiges Gehäuse 10, das an den beiden gegenüberliegenden Seiten 8,9 der Heizeinrichtung 4 zwei zueinander parallele Seitenwände 11 bzw. 12 aufweist. Die Heizstränge 6,7 sind dabei im Inneren 13 des Gehäuses 10 untergebracht, wobei jeder Heizstrang 6,7 jeweils an einer Innenseite 14 bzw. 15 der Seitenwände 11,12 wärmeübertragend anliegt. Des weiteren sind diese Seitenwände 11,12 an ihren Außenseite 16 bzw. 17 jeweils mit einem der Rippenelemente 5 wärmeübertragend verbunden. Dementsprechend entsteht eine wärmübertragende Kopplung der Heizstränge 6,7 über die Seitenwände 11,12 mit den Rippenelementen 5.

Um die Heizstränge 6,7 zur Verbesserung der Wärmübertragung gegen die Seitenwände 11,12 anzupressen, sind im Inneren 13 des Gehäuses 10 zwei Anpressplatten 18 bzw. 19 angeordnet, die jeweils auf der von der Seitenwand 11,12 abgewandten Innenseite 21 bzw. 22 des jeweiligen Heizstrangs 6,7 anliegen. Darüber hinaus können mehrere Federelemente 20 vorgesehen sein, von denen in den Fig. 3 bis 6 jeweils nur eines dargestellt ist und die zwischen den Anpressplatten 18,19 angeordnet sind und diese nach außen auseinander drücken. Mit Hilfe der Federelemente 20, werden somit die Anpressplatten 18,19 gegen die Heizstränge 6,7 und die Heizstränge 6,7 gegen die Seitenwände 11,12 angedrückt.

Entsprechend einer besonders vorteilhaften Ausführungsform sind das Gehäuse 10 und die Anpressplatten 18,19 als elektrische Leiter ausgebildet. Insbesondere sind das Gehäuse 10 und die Anpressplatten 18,19 aus Metall hergestellt. Die dabei verwendeten Heizstränge 6,7 sind so ausgebildet, daß bei jedem Heizstrang 6,7 die Innenseite 21 bzw. 22, an welcher die jeweilige Anpressplatte 18 bzw. 19 anliegt, einen ersten elektrischen Anschluß des jeweiligen Heizstrangs 6,7 bildet. Des weiteren ist bei jedem Heizstrang 6,7 eine Außenseite 23 bzw. 24, mit der der jeweilige Heizstrang 6,7 an der jeweiligen Seitenwand 11,12 des Gehäuses 10 anliegt, als zweiter elektrischer Anschluß des jeweiligen Heizstrangs 6,7 ausgebildet.

Um nun die Heizstränge 6,7 mit elektrischem Strom versorgen zu können, reicht es somit aus, die Anpressplatten 18,19 und das Gehäuse 10 entsprechend an eine Stromversorgung anzuschließen. Da die beiden Heizstränge 6,7 unabhängig voneinander zum Heizen angesteuert werden können, ist es erforderlich, die beiden Heizstränge 6,7 auch unabhängig voneinander mit der jeweiligen Stromversorgung zu verbinden. Zu diesem Zweck müssen die beiden Anpressplatten 18,19 gegeneinander isoliert sein.

Die gegenseitige Isolation der beiden Anpressplatten 18,19 kann auf vielfältige Art und Weise realisiert werden.

Beispielsweise ist es entsprechend Fig. 3 möglich, das oder die Federelemente 20 elektrisch isolierend auszubilden. Z. B. besteht jedes Federelement 20 aus einem elektrisch nicht leitenden Material. Ebenso ist es möglich, das jeweilige Federelement 20 zumindest in einem Kontaktbereich 25, in dem das Federelement 20 an einer der beiden Anpressplatten 18,19 anliegt, elektrisch zu isolieren. Diese Isolation kann beispielsweise mittels einer isolierenden Folie, Beschichtung, Lackierung, Anodisierung erreicht werden. Ebenso ist es möglich, diesen Kontaktbereich 25 mittels Anodisierung mit einer elektrisch isolierenden Oberfläche zu versehen.

Entsprechend Fig. 4 kann die gewünschte Isolierung auch dadurch erreicht werden, daß zwischen den Federelementen 20 und einer der Anpressplatten 18,19 ein elektrischer Isolator 26 angeordnet ist. Ein derartiger Isolator 26 kann beispielsweise aus einem geeigneten Kunststoff bestehen oder z.B. durch eine Mica-Folie oder durch glasfaserverstärktes Epoxidharz gebildet sein.

Entsprechend den Fig. 3 bis 5 ist zur vereinfachten Positionierung der Heizstränge 6,7 im Gehäuse 10 ein Träger 27 angeordnet, an dem beispielsweise die Anpressplatten 18,19 einclipsbar sind. Mit Hilfe eines derartigen Trägers 27 kann die Montage der Heizeinrichtungen 4 erheblich vereinfacht werden.

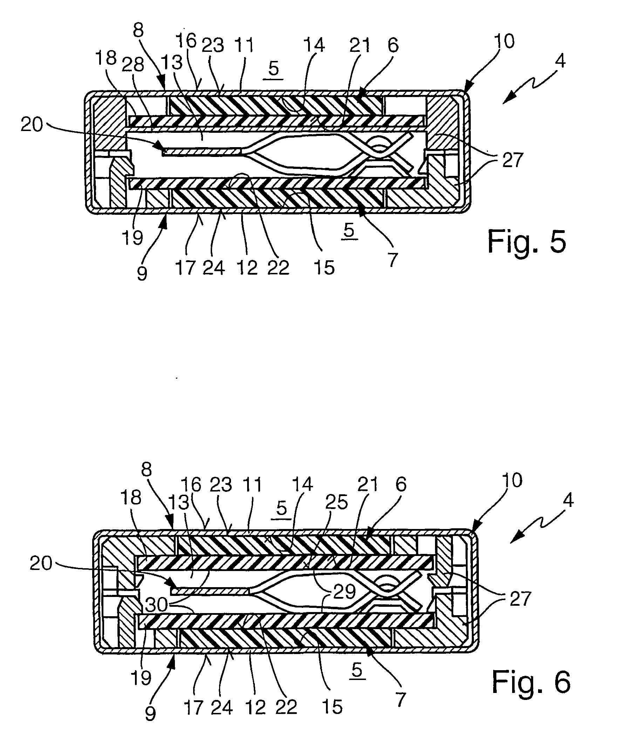

Entsprechend Fig. 5 kann bei einer besonderen Ausführungsform dieser Träger 27 eine Trennwand 28 aufweisen, die so positioniert ist, daß an dieser Trennwand 28 einerseits die eine Anpressplatte 18 anliegt und andererseits das Federelement 20 andrückt. Dabei ist das für den Träger 27 verwendete Material soweit elastisch, daß die Andrückkraft des Federelementes 20 im wesentlichen an die an der Trennwand 28 anliegende Anpressplatte 18 übertragen werden kann. Des weiteren ist der Träger 27 zumindest im Bereich seiner Trennwand 28 aus einem elektrisch isolierenden Material hergestellt, wodurch die gewünschte Isolierung der beiden Anpressplatten 18,19 gegeneinander realisiert ist. Für den Fall, daß der Träger 27 durch ein Spritzgußteil aus Kunststoff hergestellt ist, ist es zweckmäßig, den Träger 27 zumindest im Bereich seiner Trennwand 28 direkt an die jeweilige Anpressplatte 18 anzuspritzen. Auch hierdurch kann sich eine Vereinfachung der Herstellung der Heizeinrichtungen 4 ergeben. Die Trennwand 28 kann sich entlang der gesamten Länge der Anpressplatte 18 erstrecken. Ebenso ist es möglich, daß sich die Trennwand 28 als Steg nur im Bereich des Federelements 20 erstreckt, wobei dann entsprechend der Anzahl der Federelemente 20 auch mehrere stegförmige Trennwände 28 vorgesehen sein können.

Entsprechend Fig. 6 kann zur Erreichung der gewünschten Isolation zwischen den beiden Anpressplatte 18,19 bei einer oder bei beiden Anpressplatten 18,19 zumindest ein Kontaktbereich 29, in dem das Federelement 20 an der jeweiligen Anpressplatte 18,19 anliegt, mit einer geeigneten elektrischen Isolierung 30 versehen sein. Diese Isolierung 30 kann beispielsweise durch eine elektrisch isolierende Folie, Beschichtung oder Lackierung gebildet sein. Ebenso ist es möglich, die Isolierung 30 durch eine elektrisch isolierende Oberfläche auszubilden, die mittels Anodisierung hergestellt worden ist.

Die zur Herstellung der Isolierung an der jeweiligen Trägerplatte 18,19 bzw. am jeweiligen Federelement 20 verwendete Beschichtung oder Lackierung kann beispielsweise mit einem einschichtig oder mehrschichtig aufgetragenen, hochtemperaturbeständigen Lack, oder durch eine Teflonbeschichtung oder durch eine Glasfaserbeschichtung erzielt werden. Ebenso ist es möglich, eine Hochtemperatur-Polyesterfolie auf die jeweilige Anpressplatte 18,19 bzw. auf das Federelement 20 aufzukleben. Des weiteren kann auch ein Aluminiumklebeband verwendet werden, das in geeigneter Weise, z.B. mittels einer elektrisch isolierenden Folie, Beschichtung oder Lackierung isolierend ausgebildet worden ist. Darüber hinaus können die verschiedenen genannten lsolationsmöglichkeiten miteinander kombiniert werden. Schichtdicken von 10 bis 500 µm sind möglich, wobei stets darauf zu achten ist, daß die jeweilige Isolation so dimensioniert ist, daß sie der durch das jeweilige Federelement 20 erzeugten Federkraft während der gesamten vorgesehenen Lebensdauer des Wärmeübertragers 1 standhält. Die isolierende Beschichtung oder Folie ist so zu gestalten, daß sie keiner thermoplastischen Verformbarkeit über die gesamte Lebensdauer des Wärmeübertragers 1 unterliegt.

Die erfindungsgemäße Integration von zwei unabhängig voneinander ansteuerbaren bzw. betätigbaren Heizstränge 6,7 in eine Heizeinrichtung 4 ermöglicht eine verbesserte, insbesondere eine relativ feinstufig gerasterte Leistungsaufnahme der Heizeinrichtungen 4. Hierdurch ist es möglich, die bereitstehende Leistung optimal auszunutzen, um im Bedarfsfall die Luftströmung durch eine Aktivierung von mehr oder weniger Heizsträngen 6,7 zusätzlich zu beheizen. Die Verwendung von Heizeinrichtungen 4, die jeweils zwei Heizstränge 6,7 enthalten, gewährleistet dabei einerseits, daß vorhandene Konstruktionen der Wärmeübertrager 1 nicht oder nur geringfügig geändert werden müssen. Andererseits wird außerdem eine gleichmäßigere Wärmeeinleitung in die Luftströmung erreicht, auch wenn nicht alle Heizstränge 6,7 aller Heizeinrichtungen 4 aktiv sind.

Vorzugsweise ist jeder der Heizstränge 6,7 aus mindestens einem PTC-Element gebildet. Bei einem PTC-Element handelt es sich um einen Halbleiter, der einerseits bei einer Strombeaufschlagung Wärme abgibt und der andererseits mit zunehmender Wärme einen ansteigenden elektrischen Widerstand aufweist. Dies führt dazu, daß sich ein derartiges PTC-Element im Falle einer Strombeaufschlagung selbsttätig auf eine vorbestimmte Temperatur einregelt.

### Bezugszeichenliste

- 1: Wärmetauscher
- 2: Rohr
- 3: Ebene
- 4: Heizeinrichtung
- 5: Rippenelement
- 6: Heizstrang
- 7: Heizstrang
- 8: Seite von 10
- 9: Seite von 10
- 10: Gehäuse
- 11: Seitenwand von 10
- 12: Seitenwand von 10
- 13: Inneres von 10
- 14: Innenseite von 11
- 15: Innenseite von 12
- 16: Außenseite von 11
- 17: Außenseite von 12
- 18: Anpressplatte
- 19: Anpressplatte
- 20: Federelement
- 21: Innenseite von 6
- 22: Innenseite von 7
- 23: Außenseite von 6
- 24: Außenseite von 7
- 25: Kontaktbereich von 20
- 26: Isolator
- 27: Träger
- 28: Trennwand von 27
- 29: Kontaktbereich von 18,19
- 30: Isolation/Beschichtung/Lackierung/Folie/Oberfläche

## Patentansprüche

1. Zu Heizzwecken dienender Wärmeübertrager, insbesondere für ein Kraftfahrzeug,
- mit mehreren parallelen Rohren (2),
- mit mindestens einer elektrischen Heizeinrichtung (4), die jeweils zwischen zwei benachbarten Rohren (2) angeordnet ist bzw. sind,
- mit mehreren Rippenelementen (5), die jeweils zwischen paarweise benachbarten Rohren (2) sowie zwischen jeder Heizeinrichtung (4) und den dazu benachbarten Rohren (2) angeordnet sind,
**dadurch gekennzeichnet,**
- **daß** jede Heizeinrichtung (4) zwei separat ansteuerbare Heizstränge (6,7) aufweist,
- wobei der eine Heizstrang (6) an einer dem einen benachbarten Rohr (2) zugewandten Seite (8) der Heizeinrichtung (4) angeordnet ist,
- während der andere Heizstrang (7) an einer gegenüberliegenden, dem anderen benachbarten Rohr (2) zugewandten anderen Seite (9) der Heizeinrichtung (4) angeordnet ist.

2. Wärmübertrager nach Anspruch 1,
**dadurch gekennzeichnet,**
**daß** jede Heizeinrichtung (4) in einem rohrförmigen Gehäuse (10) angeordnet ist, das zwei zueinander parallele Seitenwände (11,12) aufweist, an deren Außenseiten (16,17) die Rippenelemente (5) wärmeübertragend angeordnet sind und an deren Innenseiten (14,15) die Heizstränge (6,7) wärmeübertragend angeordnet sind.

3. Wärmeübertrager nach Anspruch 1,
**dadurch gekennzeichnet,**
**daß** jede Heizeinrichtung (4) zwei Anpressplatten (18,19) enthält, die jeweils an einem der Heizstränge (6,7) anliegen und zum Anpressen der Heizstränge (6,7) gegen die Seitenwände (11,12) des Gehäuses (10) mit wenigstens einem Federelement (20) auseinander gedrückt sind.

4. Wärmeübertrager nach Anspruch 3,
**dadurch gekennzeichnet,**
- **daß** das Gehäuse (10) und die Anpressplatten (18,19) als elektrische Leiter ausgebildet sind,
- **daß** bei jedem Heizstrang (6,7) seine an der jeweiligen Anpressplatte (18,19,) anliegende Innenseite (21,22) einen ersten elektrischen Anschluß des Heizstrangs (6,7) bildet, während seine an der jeweiligen Seitenwand (11,12) des Gehäuses (10) anliegende Außenseite (23,24) einen zweiten elektrischen Anschluß des Heizstrangs (6,7) bildet,
- **daß** die beiden Anpressplatten (18,19) gegeneinander elektrisch isoliert sind.

5. Wärmeübertrager nach Anspruch 4,
**dadurch gekennzeichnet,**
**daß** das Federelement (20) elektrisch isolierend ausgebildet ist.

6. Wärmeübertrager nach Anspruch 4 oder 5,
**dadurch gekennzeichnet,**
**daß** zwischen dem Federelement (20) und wenigstens einer der Anpressplatten (18,19) ein elektrischer Isolator (26) angeordnet ist.

7. Wärmeübertrager nach einem der Ansprüche 4 bis 6,
**dadurch gekennzeichnet,**
**daß** das Federelement (20) zumindest in einem an einer der Anpressplatten (18,19) anliegenden Kontaktbereich (25) und/oder wenigstens eine der Anpressplatten (18,19) zumindest ein einem am Federelement (20) anliegenden Kontaktbereich (29) mit einer elektrisch isolierenden Folie und/oder Beschichtung und/oder Lackierung ausgestattet ist und/oder eine mittels Anodisierung elektrisch isolierende Oberfläche aufweist.

8. Wärmübertrager nach einem der Ansprüche 2 bis 7,
**dadurch gekennzeichnet,**
**daß** im Gehäuse (10) ein Träger (27) zur Positionierung der Heizstränge (6,7) angeordnet ist.

9. Wärmeübertrager nach Anspruch 8 und mindestens nach Anspruch 4,
**dadurch gekennzeichnet,**
- **daß** der Träger (27) wenigstens eine Trennwand (28) aufweist, an der einerseits eine der Anpressplatten (18,19) anliegt und an der andererseits das wenigstens eine Federelement (20) andrückt,
- **daß** der Träger (27) zumindest im Bereich seiner Trennwand (28) als elektrischer Isolator ausgebildet ist.

10. Wärmeübertrager nach Anspruch 9
**dadurch gekennzeichnet,**
**daß** der Träger (27) ein Spritzgußteil aus Kunststoff ist, das im Bereich seiner Trennwand (28) an die jeweilige Anpressplatte (18,19) angespritzt ist.

11. Wärmeübertrager nach einem der Ansprüche 1 bis 10,
**dadurch gekennzeichnet,**
**daß** jeder Heizstrang (6,7) als PTC-Element ausgebildet ist.

## Claims

1. Heat exchanger for heating purposes, in particular for a motor vehicle,
- with a plurality of parallel tubes (2),
- with one or more electric heaters (4) located between adjacent tubes (2);
- with a plurality of fin elements (5) located between pairs of adjacent tubes (2) and between each heater (4) and the adjacent tubes (2),
**characterised in that**
- each heater (4) comprises two separately controlled heating sections (6, 7),
- wherein one heating section (6) is located on a side (8) of the heater (4) which faces one adjacent tube (2),
- while the other heating section (7) is located on an opposite side (9) of the heater (4) which faces the other adjacent tube.

2. Heat exchanger according to claim 1,
**characterised in that**
each heater (4) is located in a tubular housing (10) with two parallel side walls (11, 12), on the outsides (16, 17) of which the fin elements (5) are arranged for heat transfer and on the insides (14, 15) of which the heating sections (6, 7) are arranged for heat transfer.

3. Heat exchanger according to claim 1,
**characterised in that**
each heater (4) incorporates two clamping plates (18, 19), each of which bears against one of the heating sections (6, 7) and which are pushed away from one another by at least one spring element (20) to clamp the heating sections (6, 7) against the side walls (11, 12) of the housing (10).

4. Heat exchanger according to claim 3,
**characterised in that**
- the housing (10) and the clamping plates (18, 19) are designed as electric conductors,
- **in that** on each heating section (6, 7) the inside (21, 22) in contact with the respective clamping plate (18, 19) represents a first electric connection of the heating section (6, 7), while its outside (23, 24) in contact with the respective side wall (11, 12) of the housing (10) represents a second electric connection of the heating section (6, 7), and
- **in that** the two clamping plates (18, 19) are electrically insulated from one another.

5. Heat exchanger according to claim 4,
**characterised in that**
the spring element (20) is designed for electric insulation.

6. Heat exchanger according to claim 4 or 5,
**characterised in that**
an electric insulator (26) is provided between the spring element (20) and at least one of the clamping plates (18, 19).

7. Heat exchanger according to any of claims 4 to 6,
**characterised in that**
the spring element (20) is provided in at least one contact area (25) bearing against one of the clamping plates (18, 19) and/or **in that** at least one of the clamping plates (18, 19) is provided in a contact area (29) bearing against the spring element (20) with an electrically insulating film and/or coating and/or paint and/or has a surface made electrically insulating by means of anodising.

8. Heat exchanger according to any of claims 2 to 7,
**characterised in that**
a support (27) for positioning the heating sections (6, 7) is provided in the housing (10).

9. Heat exchanger according to claim 8 and at least according to claim 4,
**characterised in that**
- the support (27) has at least one partition (28), one side of which is in contact with one of the clamping plates (18, 19), while the at least one spring element (20) bears against the other side, and
- **in that** the support (27) is designed as an electric insulator at least in the area of its partition (28).

10. Heat exchanger according to claim 9,
**characterised in that**
the support (27) is a plastic injection moulding moulded onto the respective clamping plate (18, 19) in the area of its partition (28).

11. Heat exchanger according to any of claims 1 to 10,
**characterised in that**
each heating section (6, 7) is designed as a PTC element.

## Revendications

1. Dispositif de transmission de chaleur utilisé à des fins de chauffage, en particulier pour un véhicule automobile,
- avec une pluralité de tubes (2) parallèles,
- avec au moins un dispositif de chauffage (4) électrique, le ou les dispositifs de chauffage étant disposés respectivement entre deux tubes (2) voisins,
- avec une pluralité d'éléments formant ailette (5) disposés respectivement entre des tubes (2) disposés par paire ainsi qu'entre chaque dispositif de chauffage (4) et les tubes (2) leur étant voisin,
**caractérisé en ce que**,
- chaque dispositif de chauffage (4) présente deux tronçons de chauffage (6, 7) pouvant être commandés séparément,
- un premier tronçon de chauffage (6) est disposé sur un côté, tourné vers un tube (2) voisin, du dispositif de chauffage (4),
- tandis que l'autre tronçon de chauffage (7) est disposé sur un autre côté (9) opposé, tourné vers l'autre tube (2) voisin, du dispositif de chauffage (4).

2. Dispositif de transmission de chaleur selon la revendication 1 **caractérisé en ce que** chaque dispositif de chauffage (4) est disposé dans un boîtier (10) à forme tubulaire, présentant deux parois latérales (11, 12) parallèles l'une à l'autre, sur les faces extérieures (16, 17) desquelles sont disposés, avec effet de transfert de la chaleur, les éléments formant ailette (6) et sur les faces intérieures (14, 15) desquelles sont disposés, avec effet de transfert de la chaleur, les tronçons de chauffage (6,7).

3. Dispositif de transmission de chaleur selon la revendication 1, **caractérisé en ce que** chaque dispositif de chauffage (4) contient deux plaques de pressage (18, 19), appuyant chacune sur l'un des tronçons de chauffage (6, 7) et, pour assurer le pressage des tronçons de chauffage (6, 7) contre les parois latérales (11, 12) du boîtier (10), pressées pour s'écarter l'une de l'autre, à l'aide d'au moins un élément élastique (20).

4. Dispositif de transmission de chaleur selon la revendication 3 **caractérisé en ce que**
- le boîtier (10) et les plaques de pressage (18, 19) sont réalisées sous la forme de conducteurs électriques,
- **en ce que**, pour chaque tronçon de chauffage (6, 7) sa face intérieure (21, 22), s'appuyant sur la plaque de pressage (18, 19) respective, forme un premier raccordement électrique du tronçon de chauffage (6, 7) tandis que sa face extérieure (23, 24), s'appuyant chaque fois sur la paroi latérale (11, 12) respective du boîtier (10), forme un deuxième raccordement électrique du tronçon de chauffage (6, 7),
- **en ce que** les deux plaques de pressage (18, 19) sont isolées électriquement l'une de l'autre.

5. Dispositif de transmission de chaleur selon la revendication 4, **caractérisé en ce que** l'élément élastique (20) est isolant de l'électricité.

6. Dispositif de transmission de chaleur selon la revendication 4 ou 5, **caractérisé en ce que**, entre l'élément élastique (20) et au moins l'une des plaques de pressage (18, 19), est disposé un isolant (26) électrique.

7. Dispositif de transmission de chaleur selon l'une des revendications 4 à 6, **caractérisé en ce que** l'élément élastique (20) présente, au moins dans une zone de contact (25), en appui sur l'une des plaques de pressage (18, 19), et/ou au moins l'une des plaques de pressage (18, 19), au moins en une zone de contact (29) en appui sur l'élément élastique (20) et muni d'une feuille et/ou d'un revêtement et/ou d'un laquage, isolant de l'électricité, et/ou présente une surface isolant de l'électricité, l'isolation étant obtenue par anodisation.

8. Dispositif de transmission de chaleur selon l'une des revendications 2 à 7, **caractérisé en ce que**, dans le boîtier (10), est disposé un support (27) servant au positionnement des tronçons de chauffage (6, 7).

9. Dispositif de transmission de chaleur selon la revendication 8 et au moins selon la revendication 4, **caractérisé en ce que**
- le support (27) présente au moins une paroi de séparation (28), sur laquelle, d'une part, appuie l'une des plaques de pressage (18, 19) et sur laquelle, d'autre part, presse ledit au moins un élément élastique (20),
- **en ce que** le support (27) est réalisé sous forme d'isolant électrique au moins dans la zone de sa paroi de séparation (28).

10. Dispositif de transmission de chaleur selon la revendication 9, **caractérisé en ce que** le support (27) est une pièce moulée par injection, réalisée en matière synthétique, surmoulée par injection sur la plaque de pressage (18, 19), dans la zone de sa paroi de séparation (28).

11. Dispositif de transmission de chaleur selon l'une des revendications 1 à 10, **caractérisé en ce que** chaque tronçon de chauffage (6, 7) est réalisé sous la forme d'élément PTC (caractéristique de température positive).
